Europäisches Patentamt

European Patent Office

Office européen des brevets

(19)

(11) **EP 1 241 443 A1**

(12) **EUROPÄISCHE PATENTANMELDUNG**

(43) Veröffentlichungstag:
 **18.09.2002  Patentblatt 2002/38**

(51) Int Cl.$^7$: **G01C 15/00**

(21) Anmeldenummer: **01105432.7**

(22) Anmeldetag: **13.03.2001**

(84) Benannte Vertragsstaaten:
 **AT BE CH CY DE DK ES FI FR GB GR IE IT LI LU MC NL PT SE TR**
 Benannte Erstreckungsstaaten:
 **AL LT LV MK RO SI**

(71) Anmelder: **Leica Geosystems AG**
 **9435 Heerbrugg (CH)**

(72) Erfinder: **Hinderling, Jürg, Dr.**
 **9437 Marbach (CH)**

(74) Vertreter: **Kaminski, Susanne et al**
 **Büchel, Kaminski & Partner**
 **Austrasse 79**
 **9490 Vaduz (LI)**

(54) **Verfahren und Vorrichtung zur Ermittlung des dispersiven Einflusses auf eine Messung**

(57)     Die Laufzeiten elektromagnetischer Strahlung wenigstens zweier verschiedener Trägerwellenlängen werden entlang einer Strecke gemessen, wobei eine erste Trägerwellenlänge in einem Wellenlängenbereich ohne molekulare oder atomare Absorption atmosphärischer Gase (4) ausgewählt wird und eine zweite Trägerwellenlänge in einem Wellenlängenbereich mit molekularer oder atomarer Absorption, vorzugsweise in einem Spektralbereich mit wirksamen Spektrallinien, atmosphärischer Gase (4) ausgewählt wird, und der dispersive Einfluss aus wenigstens 2 gemessenen Laufzeiten der elektromagnetischen Strahlung berechnet wird.

Fig. 3

**Beschreibung**

Die Erfindung betrifft ein Verfahren zur Ermittlung des dispersiven Einflusses auf eine Messung entlang einer Sichtstrecke nach dem Oberbegriff des Anspruchs 1, eine Vorrichtung zur Messung der Dispersion nach dem Oberbegriff des Anspruchs 7, sowie eine Verwendung des Verfahrens zur dispersiven Distanzkorrektur eines Entfernungsmessgerätes nach dem Oberbegriff des Anspruchs 6 und die Verwendung einer Vorrichtung zur Korrektur der aus der Dispersion resultierenden Einflüsse auf Distanzmessungen nach Anspruch 17.

Bei der elektro-optischen Entfernungsmessung im Distanzbereich zwischen 100 m bis mehreren km wird die Messung massgeblich durch den Brechungsindex der Luft beeinflusst. Die Ausbreitungsgeschwindigkeit eines bei der elektro-optischen Entfernungsmessung emittierten optischen Impulses oder eines in beliebiger Weise modulierten Signalzuges, wird durch den Gruppenbrechungsindex **n** festgelegt. Dies gilt sowohl für elektro-optische Entfernungsmesser die nach dem Phasenals auch nach dem Laufzeitmessprinzip basieren.

Brechungs- und Gruppenbrechungsindex sind dabei keine konstanten Grössen, sondern hängen vorwiegend von Wellenlänge, Temperatur, Luftdruck, Gasgemisch und vom Feuchtegehalt der jeweilig vorherrschenden Atmosphäre ab.

Bei fast allen Vorrichtungen zur elektronischen Distanzmessung (EDM-Vorrichtungen) wird der Einfluss der atmosphärischen Parameter nach Abschluss der eigentlichen Entfernungsmessung im Rahmen eines weiteren rechnerischen Schritts als Distanzkorrektur angefügt. Die massgeblichen atmosphärischen Parameter werden dabei jeweils nicht mit dem Distanzmesser sondern anderen, separaten Instrumenten wie Thermometer, Barometer und Hygrometer gemessen.

Die unmittelbar gemessene und am elektronischen Distanzmesser (EDM) angezeigte Streckenlänge $D_0$ (Rohmessung) bezieht sich auf einen bestimmten Gruppenbrechungsindex $n_0$. Anhand der zusätzlich gemessenen meteorologischen Parameter Temperatur T, Luftdruck p und relativer Luftfeuchtigkeit RH kann der wahre Gruppenbrechungsindex $n = n(T,p,RH,....)$ berechnet werden. Mittels einer sogenannten atmosphärischen Korrektur

$$\Delta D = D_0 \cdot \left( \frac{n_0 - n}{n} \right)$$

lässt sich die wahre Distanz D ermitteln:

$$D = D_0 + \Delta D$$

Mit dieser atmosphärischen "Post-Processing" Methode werden in der Regel Distanzmessgenauigkeiten gegen 1 ppm erreicht, sind hingegen Temperatur T und Luftdruck p nicht bekannt oder über die gesamte optische Weglänge nicht repräsentativ, so kann die gemessene Rohdistanz $D_0$ leicht 30 ppm oder mehr vom wahren Wert abweichen.

Bei längeren Strecken, die zudem noch meist über ungleichmässige Topographie führen, wird eine zuverlässige Bestimmung des wirksamen Gruppenbrechungsindexes aus meteorologischen Daten an den Streckenendpunkten problematisch. Versuche, diese Daten längs des Zielstrahls zu bestimmen, waren bisher nicht erfolgreich.

Einer der Grundgedanken bestand in der Ausnutzung der spektral breitbandigen Dispersion, indem die Strecke mit Licht oder elektromagnetischer Strahlung zweier unterschiedlicher Wellenlängen ausgemessen wird. Diese 2- oder Mehrfarbenmessmethode ist seit ca. 1975 bekannt. Bei gleichzeitiger Distanzmessung mit mindestens 2 verschiedenen, elektromagnetischen Wellenlängen, optisch oder auch im Mikrowellenbereich, kann mittels des bekannten, spektral breitbandigen dispersiven Verhaltens der Atmosphäre der oder die wichtigsten atmosphärischen Störparameter bestimmt werden, um schliesslich die Distanzmessung vom Einfluss des in der Regel nicht genau bekannten Gruppenbrechungsindexes weitgehend zu korrigieren.

Entsprechende Theorien basieren auf den spektral breitbandigen Formeln von Edlen und Barrel & Sears. (Ref. Rainer Joeckel, Manfred Stober: Elektronische Entfernungs- und Richtungsmessung, Verlag Konrad Wittwer).

Die Streckenmessergebnisse der 2 Trägerwellenlängen sind $D_r$ und $D_b$, die entsprechenden Brechungsindices $n_r$ und $n_b$. Die wahre Distanz ergibt sich nach folgender Formel für. die Distanzkorrektur:

$$D = D_r - \left( D_b - D_r \right) \cdot \left( \frac{n_r - 1}{n_b - n_r} \right)$$

Die eigentliche Problematik dieser, auf dem Modell der spektral breitbandigen Formel basierenden, 2-Farbenmethode besteht in der Auflösegenauigkeit, mit welcher die Streckendifferenz $(D_b - D_r)$ ermittelt werden muss. Je weiter die beiden Trägerwellenlängen auseinander liegen, desto kleiner und günstiger wird damit der Modellparameter

$$Q = \left( \frac{n_r - 1}{(n_b - n_r)} \right)$$

Da sich die Auflösegenauigkeit unabhängig von der Distanzlänge auswirkt, sind diese Art von Zweifarbeninstrumente erst bei längeren Strecken mit einer deutlich oberhalb von 2 km liegenden Distanz der Einfarbenmessung potentiell überlegen.

Bekannte 2-Farbeninstrumente sind beispielsweise Goran I vom National Physical Laboratory (Teddington/UK) mit $\lambda_b$ = 458$nm$ und $\lambda_g$ = 514$nm$, und dem grossen $Q$ = 57. Für einen Distanzfehler von 1 mm beträgt die erforderliche Auflösegenauigkeit dabei 0,02 mm. Da letztere nicht oder nur sehr umständlich realisierbar ist, konnte sich diese Methode bis heute nicht durchsetzen.

Aus der Patentschrift US 5 233 176 ist eine Vorrichtung mit 2-Farben-Methode bekannt, die atmosphärische Einflüsse auf Messungen durch die Auswertung der Ablage zweier Laserstrahlen unterschiedlicher Wellenlängen von einem jeweiligen Referenzstrahlengang kompensiert. Hierbei wird Laserlicht mit zwei unterschiedliche Trägerwellenlängen in kurzen Pulsen emittiert. Aus der dispersiven Verschiebung der beiden Strahlgänge von der geraden Linie wird auf den dispersiven Einfluss geschlossen und die Messung korrigiert.

Ein erheblicher Nachteil aller bisherigen Vorrichtungen mit 2 oder 3 Trägerwellenlängen ist die Ausnutzung der schwachveränderlichen breitbandigen optischen Dispersion. Es wird dabei immer nach den breitbandigen Modellen von Barrel & Sears oder nach den Formeln nach Edlen verfahren. Ebenso wurden bisher auch im Mikrowellenbereich lediglich breitbandige Verfahren eingesetzt. Der Hauptnachteil ist der schwache Messeffekt, der lediglich eine ungenaue Distanzkorrektur ermöglicht, welche unter der Qualität der klassischen atmosphärischen Korrektion anhand der Bestimmung der meteorologischen Parameter T,p und RH liegt.

Die technische Aufgabe der vorliegenden Erfindung besteht in der Bereitstellung eines Verfahrens und einer Vorrichtung zur Messung der Dispersion entlang einer Sichtstrecke, die auf der Ausnützung von spektral schmalbandigen, atmosphärischen Strukturen, sowohl im absorptiven (imaginärer Brechungsindex) als auch im dispersiven Verhalten (realer Brechungsindex) basieren.

Diese Aufgabe wird erfindungsgemäss durch die kennzeichnenden Merkmale der Ansprüche 1 und 7 gelöst. Verwendungen des Verfahrens und der Vorrichtung ergeben sich aus den Ansprüchen 6 und 17. Vorteilhafte und alternative Ausgestaltungen und Weiterbildungen der Vorrichtungen und des Verfahrens ergeben sich aus den Merkmalen der Unteransprüche.

Bei genauerer Betrachtung zeigt sich, dass die atmosphärische Transmission und damit auch der Brechungsindex bei gewissen Wellenlängen spektrale Strukturen aufweist, die in ihrem Verhalten von der Formel von Edlen abweichen. Es gibt also Bereiche, wo die Edlen-Formel nicht gilt und die Effekte ausgeprägter sind als bisher bekannt ist.

Der für die 2-Farben-Absorptionsmethode dominante meteorologische, atmosphärische Parameter in der Formel von Barrel & Sears ist die Teilchendichte der Luftmoleküle, dabei geht man von der recht gut erfüllten Annahme des idealen Gases aus. Es existiert also primär eine Unbekannte, die eben mit einer zusätzlichen Messung (die zweite Trägerwelle) zu bestimmen ist.

Mit einem Laser lässt sich grundsätzlich mittels Transmissionsmessung die integrierte Teilchendichte einer Molekülsorte messen. Das vermessene Molekül muss dabei zu den sogenannten "uniformly mixed gases" gehören, um für die gesamte atmosphärische Zusammensetzung repräsentativ zu sein. Zu diesen Gasen gehören insbesondere $CO_2$, $O_2$, $NO_2$, $O_3$, $CH_4$, $NO$, $NH_3$. Zusätzlich muss das Molekül spektrale Texturen im Wellenlängenbereich von kommerziellen, kostengünstigen Halbleiterlasern und Detektoren aufweisen. Des weiteren sollte der optische Effekt auch vernünftig messbar sein, so dass nur Gase mit hohem Partialdruck oder starker Absorption in Frage kommen.

Als besonders geeignet kann Sauerstoff $O_2$ gelten. Bei einer hohen Konzentration von 20,95 % besitzt er am langwelligen Ende des sichtbaren Spektral-Bereichs zwischen 759nm und 778nm seine stärksten Absorptionsbanden. Für diesen Bereich sind kommerziell erhältliche Laserdioden sowie auch empfindliche Halbleiter-Detektoren verfügbar, so dass kostengünstige Lösungen realisierbar sind.

Das EDM-Empfangssignal wird (2-farbig) bei 785nm und 760nm gemessen. Um die Distanzmessung auf 1 ppm korrigieren zu können, müsste das relative Signal auf 0,1% genau gemessen werden. Für eine auf 10 ppm genaue Distanzkorrektur ist eine EDM-Signalmessung auf 1 % genau erforderlich.

Die theoretisch mögliche direkte Messung der Absorption besitzt gegenwärtig nicht die erforderliche Auflösung, die jedoch bei Laufzeitmessungen erreicht werde kann.

Aus wissenschaftlichen Veröffentlichungen ist bekannt, dass die gegenwärtige Genauigkeitsgrenze für Messungen optischer Signale bei 1% liegt, wobei der Haupteinflussfaktor auf Abweichungen der Signalmessung die atmosphärische Turbulenz ist. Somit kann mit dem erfindungsgemässen Verfahren und der erfindungsgemässen Vorrichtung eine Streckenmessung zumindest auf 10 ppm genau gemessen werden.

Im Vergleich zu den theoretisch möglichen rein absorptiven Messungen sind mittels Ausnutzung der dispersiven Effekte im Bereich einer Absorptionslinie genauere Distanzkorrekturen erreichbar, dies nicht zuletzt wegen der hohen Auflösung der Laufzeit.

Mit einem spektral schmalbandigen single-mode Diodenlaser lassen sich Strukturen im spektroskopisch aktiven Sauerstoffband optimal ausnützen. Der Laser wird auf einen Bereich mit stark überhöhten Brechungsindex abgestimmt, wodurch der Dispersionseffekt stärker ausgeprägt und die Distanzkorrektur höher aufgelöst wird.

Optimal geeignete Spektralbereiche mit bis zu -390 ppm Abweichung zur Formel von Edlen werden durch starke Absorptionslinien blockiert, die stärkste Gruppenbrechungsindexabweichung mit noch genügend hoher Transmission beträgt +48 ppm. Für eine Messung $d_{mess,ir}$ im infraroten und einer Messung $d_{mess,rot}$ im roten Bereich und mit diesem Wert wird die Distanzkorrektur zu:

$$d_{wahr} = d_{mess,ir} - Q \cdot (d_{mess,ir} - d_{mess,rot})$$

wobei $Q = 6,2$.

Die Korrektur ist dreimal besser als bei der klassischen 2-Farbenmethode nach Edlen oder Barrel & Sears.

Bei diesem Ansatz muss jedoch die Laser-Wellenlänge auf die $O_2$-Linie stabilisiert werden, wofür Laserdioden und Verfahren bekannt sind.

Eine andere Alternative stellt die 2-Farben-Dispersionsmethode mit Multimode-Laserdiode dar. Dieses dritte Verfahren ist quasi das komplementäre zum klassischen 2-Farbenverfahren. Beim klassischen Verfahren wird mit schmalbandigen Lasern gearbeitet die auf ein breitbandiges Dispersionsgebiet der Atmosphäre wirken, in diesem Fall wirkt eine breitbandige Lichtquelle auf einen schmalbandig-strukturierten Absorptionsbereich des Luftgemisches.

Sauerstoff hat im Bereich um 760 nm zwei starke Absorptionsbanden, die eine liegt zwischen 759.58 nm und 761.8246 nm und die andere bei 762.1802 nm und 778.37 nm. Die erste Bande hat 115 Linien, mit 28 starken Linien (integrated intensity $> \frac{10^{-25} \, cm^2 \cdot cm^{-1}}{Molekül}$), die längerwellige hat 171 Linien mit 27 starken Linien. Die Linien im ersten Band berühren sich im Mittel beinahe und kumulieren sich dadurch verstärkt in deren optischen Auswirkungen auf den Dispersionseffekt.

Bestimmend für diese dritte Methode ist die Abweichung von der Formel von Edlen oder Barrel & Sears. Der spektral gemittelte und superponierte Gruppenbrechungsindex innerhalb des Absorptionsbands liegt im Schnitt um 13 ppm höher als der Wert neben dem Absorptionsband, welcher dem klassischen Modell von Edlen entspricht. Das Resultat für die neuartige Distanzkorrektur wird:

$$d_{wahr} = d_{mess,ir} - Q \cdot (d_{mess,ir} - d_{mess,rot})$$

wobei $Q = 23$.

Die Korrektur ist in diesem Fall gleich gut wie bei der klassischen 2-Farbenmethode nach Edlen. Es besteht aber der Vorteil, dass bei der neuen Methode keine kurzwelligen Laser benötigt werden. Letztere sind meist grossvolumig, teuer, und haben einen grossen Energieverbrauch, welcher für batteriebetriebene Feldinstrumente wie Tachymeter unbrauchbar sind. Kurzwellige Laserdioden besitzen bisher ungenügende Lebensdauern und Zuverlässigkeiten.

Die erfolgten Angaben müssen im Kontext der typischen atmosphärischen Skalierungsfehler gesehen werden, diese können bei Schrägmessungen, über ungleichmässiger Topographie oder starken Temperaturunterschieden bis oder sogar mehr als 30 ppm betragen.

Eine Distanzmessung ist auch bei kurzen Distanzen mit einem absoluten Fehler von $\pm 0,3$ mm behaftet. Die Grösse $(d_{mess,ir} - d_{mess,rot})$ weist also mindestens einen statistischen Fehler von ca. 0,5 mm auf. Der Fehler bei der 2-Farbendistanzkorrektur $Q \cdot (d_{mess,ir} - d_{mess,rot})$ beträgt daher $Q \cdot (0,5mm)$.

Alternativ kann durchwegs der kritische, im Absorptionsband von Sauerstoff liegende Sender durch eine schmalbandige LED oder durch eine LED in Kombination mit einem schmalbandigen Filter, beispielsweise einem Interferenzfilter, ersetzt werden mit der der anomale Dispersionseffekt auch gemessen werden kann, wobei die Wellenlängen-Stabilisierung vollständig wegfallen kann.

In baulicher Hinsicht ergeben sich für die erfindungsgemässe Vorrichtung weitere Vorteile. Als Lichtquelle sind bei den heutigen geodätischen Distanzmessinstrumenten kostengünstige Laserdioden mit kleiner Baugrösse im Einsatz. Mit der Erfindung kann nun für die zweite Lichtquelle ebenfalls eine kostengünstige Laserdiode oder LED eingesetzt werden, und zwar von derselben Kompaktheit, kleinen Baugrösse und Ansteuerungsverhalten wie die erste Lichtquelle des Distanzmessers. Dadurch werden technisch einfache Realisierungen der 2-Farbenmethode möglich, da insbesondere der Sendestrahlengang und die elektronische Ansteuerung lediglich zu duplizieren sind.

Ein weiterer Vorteil liegt empfangsseitig vor. Die optischen Trägerwellenlängen der beiden Laserdioden können nahe beieinander liegend gewählt werden. Wird der Abstand beispielsweise auf 5 nm bis 10 nm festgelegt, dann genügt für die Hintergrundblockung ein gemeinsames, einfaches optisches Bandpassfilter.

Einer der wichtigsten empfängerseitigen Vorteile liegt darin, dass wegen der spektralen Nähe der beiden Trägerwellenlängen eine gemeinsame Empfangsdiode, wie beispielsweise eine gebräuchliche Avalanche-Photodiode (APD), genügt. Bei den herkömmlichen 2-Farbenmethoden sind die optischen Trägerwellenlängen möglichst weit voneinander separiert, um den Dispersionseffekt zu verstärken, dies ist aber mit dem Nachteil verbunden, dass die Empfangsdioden diesen grossen optischen Spektralbereich nicht abdekken.

In der Regel liegt bei den Realisierungen der herkömmlichen 2-Farbenmethode eine der beiden Trägerwellenlängen im blauen Spektralbereich. Dort gibt es aber im Vergleich zum 800 nm -Bereich weder empfindliche noch kostengünstige Avalanche-Photodioden.

Ein weiterer Nachteil bei der Verwendung der breitbandigen Methode mit blauem Licht ist das atmosphärische Streuvermögen. Der Streukoeffizient der Luft nimmt mit kürzer werdender Wellenlänge mit der 4-ten Potenz zu. Dieser Effekt wird durch den Mechanismus der Rayleigh-Streuung verursacht. Bei der Methode des Stands der Technik ist der Signalleistungsverlust bei der kurzwelligen Strahlung ca. 16x grösser als bei dem erfindungsgemässen Verfahren mit Wellenlängen um 800 nm, die blaue Wellenlänge von 400 nm ist 2x kürzer als bei dem erfindungsgemässen Verfahren, der Faktor erklärt sich aus der Abhängigkeit mit 4-ter Potenz der Rayleigh-Streuung.

Die spektrale Nähe der beiden Trägerwellenlängen besitzt noch weitere Vorteile. Der gesamte optische Empfangskanal kann ohne besondere Aufwendungen für beide Farben gemeinsam benutzt werden. Die sonst dominanten chromatischen optischen Abbildungsaberrationen sind nicht vorhanden. Bei der herkömmlichen 2-Farbenmethode mit weit auseinander liegenden Trägerwellenlängen müssen bei Vorrichtungen des Stands der Technik komplizierte optische Korrekturlinsen eingesetzt werden.

Die erfindungsgemässe Vorrichtung und das Verfahren werden nachfolgend anhand von in der Zeichnung schematisch dargestellten Ausführungsbeispielen rein beispielhaft näher beschrieben. Im einzelnen zeigen

Fig. 1 eine Nutzung der normalen Dispersion für eine 2-Farben-Methode des Standes der Technik;

Fig. 2 eine schematische Darstellung der Verwendung einer erfindungsgemässen Vorrichtung in einem Theodolitfernrohr;

Fig. 3 eine Ausnutzung der schmalbandigen Dispersion mit Singlemode Lasern;

Fig. 4 eine Ausnutzung der schmalbandigen Dispersion mit Multimode Lasern;

Fig. 5 eine Ausnutzung der schmalbandigen Dispersion mit lichtemittierenden Dioden (LED) und

Fig. 6 eine Darstellung des feinstrukturierten Verlaufs des Gruppenbrechungsindex.

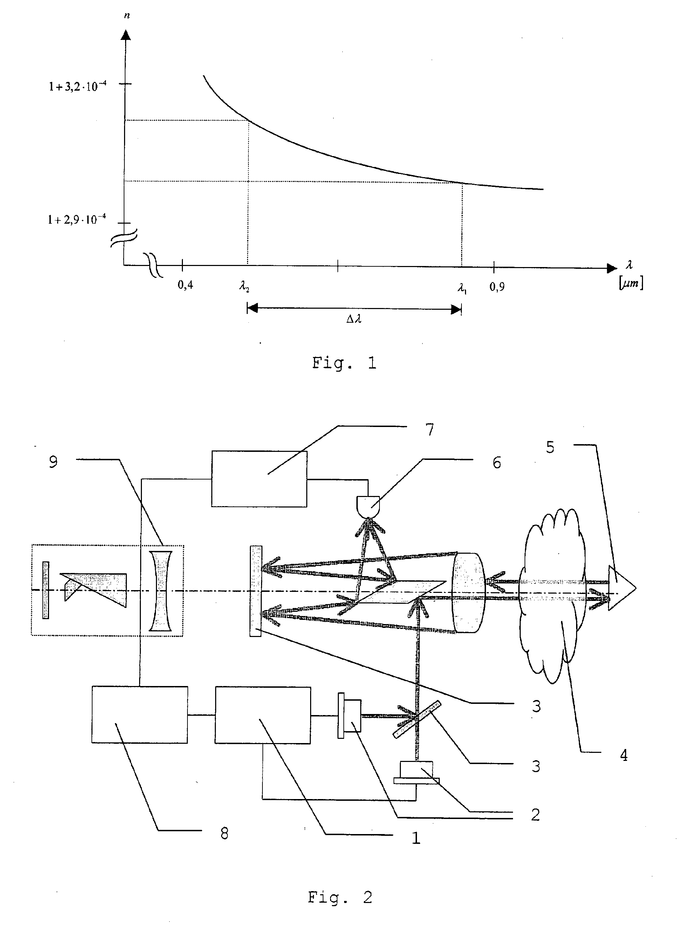

Fig.1 zeigt eine Nutzung der normalen Dispersion für eine 2-Farben-Methode des Standes der Technik durch Verwendung von zwei Trägerwellenlängen $\lambda_1$ und $\lambda_2$, die ein atmosphärisches Gas im sichtbaren Spektralbereich und in Bereichen normaler Dispersion sondieren. Auf der horizontalen Achse ist die Wellenlänge $\lambda$, auf der vertikalen Achse der Brechungsindex n aufgetragen. Da die Präzision der Dispersionskorrektur eine möglichst grosse Differenz der vermessenen Brechungsindices verlangt, müssen aufgrund der Abhängigkeit des Brechungsindex von der Wellenlänge zwei Trägerwellenlängen gewählt werden, die weit auseinanderliegen, d.h. die Differenz $\Delta\lambda$ der Trägerwellenlängen $\lambda_1$ und $\lambda_2$ wird maximiert.

In Fig.2 wird eine beispielhafte Realisierung der erfindungsgemässen Vorrichtung in einem Theodolitfernrohr schematisch gezeigt. Von einer Sendeeinheit 1 werden Strahlungsquellen 2 angesteuert, die elektromagnetische Strahlung unterschiedlicher Trägerwellenlängen emittieren. Über einen Strahlteiler 3 werden beide Trägerwellenlängen zusammengeführt und durch das zu sondierende atmosphärische Gas 4 auf einen Reflektor 5 geleitet. Nach erfolgter Reflexion wird die Strahlung von einem Empfänger 6 aufgenommen und in einer Empfangseinheit 7 elektronisch verarbeitet. In einer nachgeschalteten Distanzmesseinheit 8 wird die zu messende Distanz berechnet und hinsichtlich des dispersiven Einflusses korrigiert. Optional kann ein visuelles Fernrohr 9 zur Ausrichtung des Theodoliten Verwendung finden.

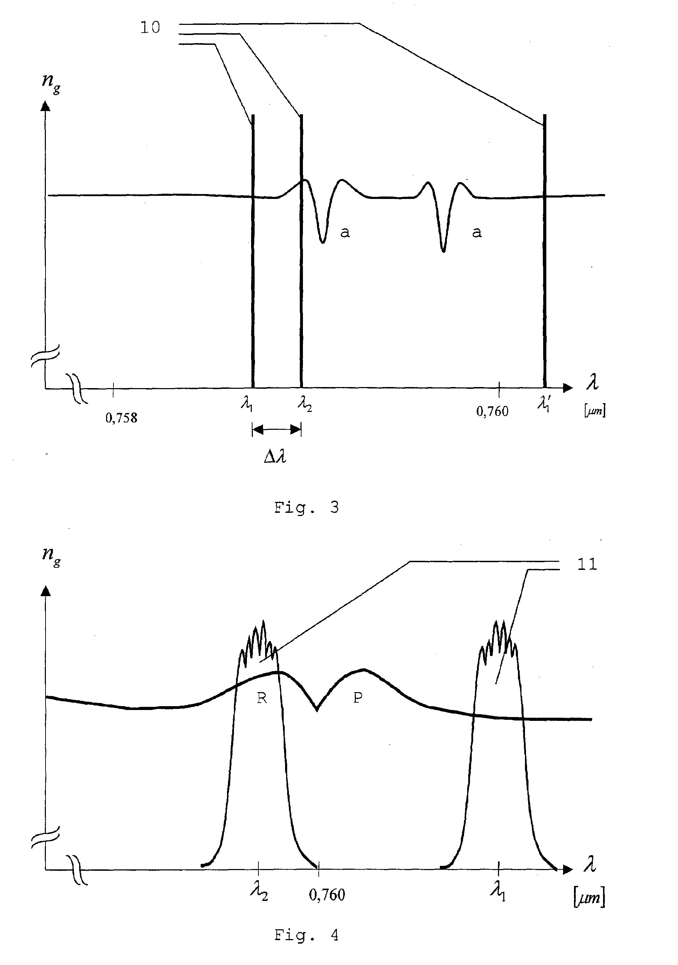

Fig.3 zeigt eine Darstellung des erfindungsgemässen Verfahrens unter Ausnutzung der schmalbandigen Dispersion mit Singlemode Lasern. Auf der horizontalen Achse ist die Wellenlänge $\lambda$, auf der vertikalen Achse der Gruppenbrechungsindex $n_g$ aufgetragen. Die Kurve des Brechungsindex zeigt zwei Resonanzen a des zu sondierenden atmosphärischen Gases, das in diesem Beispiel Sauerstoff $O_2$ ist. Das Verfahren verwendet zwei Laser-Moden 10 mit unterschiedlichen, aber hinsichtlich des Standes der Technik vergleichsweise nahe beieinander liegenden Trägerwellenlängen $\lambda_1$, $\lambda_1'$ und $\lambda_2$. Mit der Trägerwellenlänge $\lambda_1$ oder $\lambda_1'$ wird ein Bereich normaler Dispersion sondiert, wobei die Trägerwellenlänge $\lambda_1$, $\lambda_1'$ auf der kürzer- oder langwelligeren Seite der Resonanzen a liegen kann. Bei hinreichend grossem Abstand kann auch ein Bereich normaler Dispersion zwischen den Resonanzen a getroffen werden. Die Trägerwellenlänge $\lambda_2$ trifft einen Bereich mit stark überhöhten Brechungsindex in unmittelbarer Nähe der eigentlichen Resonanz a. Durch die Nutzung dieses überhöhten Brechungsindex kann auch mit nahe beieinander liegenden Trägerwellenlängen $\lambda_1$, $\lambda_1'$ und $\lambda_2$ eine hinreichend grosse Differenz der Brechungsindices erreicht werden.

Eine alternative Realisierungsform wird in Fig. 4 gezeigt. Auf der horizontalen Achse ist die Wellenlänge $\lambda$, auf der vertikalen Achse der Gruppenbrechungsindex $n_g$ aufgetragen. Mit zwei Multimode-Lasern 11 werden Bereiche normaler Dispersion und Bereiche mit Rotations-Schwingungs-Banden getroffen. Die schmalbandig um die Trägerwellenlänge $\lambda_2$ liegenden Laser-Moden sondieren hier den R-Zweig R der Rotations-Schwingungs-Banden von Sauerstoff $O_2$. Der andere Multimode-Laser 11 emittiert Moden um eine andere Trägerwellenlänge $\lambda_1$, die hier beispielsweise im längerwelligen Bereich des Spektrums liegt.

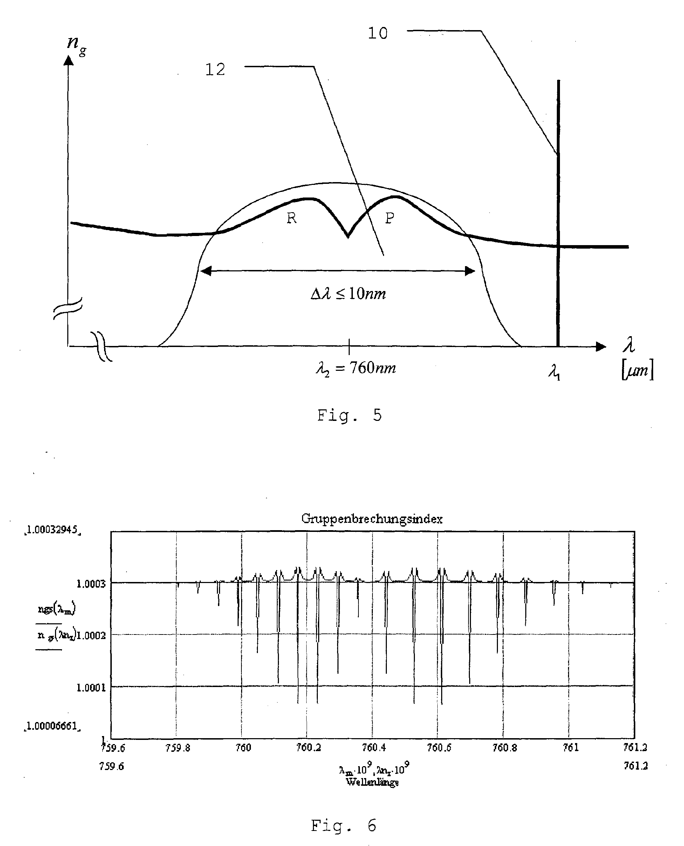

Fig.5 beschreibt eine dritte Variante des erfindungsgemässen Verfahrens, bei der die um die Trägerwellenlänge $\lambda_2$ liegende schmalbandige Strahlung einer lichtemittierenden Diode (LED) 12 den Bereich des R-Zweiges R und des P-Zweiges P der Rotations-Schwingungs-Banden von Sauerstoff $O_2$ überdeckt und somit vollständig erfasst. Mit einer zweiten Trägerwellenlänge $\lambda_1$, die beispielsweise als Singlemode-Laser 10 realisiert werden kann, wird ein Bereich normaler Dispersion getroffen. Bei der Auswertung sind die unterschiedlichen Beiträge der verschiedenen wellenlängenabhängigen Brechungsindices des erfassten Bereichs der R- und P-Zweige R, P zu berücksichtigen. Durch die Nutzung dieses Bereichs mit Anteilen von überhöhten Brechungsindices kann auch mit einer LED und einem Multi- oder Singlemode-Laser eine hinreichend grosse Differenz der Brechungsindices erreicht werden.

In Fig.6 wird exemplarisch ein feinstrukturierter, schmalbandiger Verlauf des Gruppenbrechungsindex im Absorptionsband eines atmosphärischen Gases dargestellt. Die Kurve ist lediglich qualitativ dargestellt und beinhaltet keine quantitativen Aussagen.

Es versteht sich, dass die dargestellten Figuren eine von vielen Ausführungsformen darstellen und der Fachmann alternative Realisierungsformen, z.B. unter Verwendung anderer atmosphärischer Gase oder anderer Mittel zur Emission und zum Empfang elektromagnetischer Strahlung oder zur Signalaufnahme oder Signalverarbeitung, ableiten kann.

**Patentansprüche**

1. Verfahren zur Ermittlung des dispersiven Einflusses auf eine Messung entlang einer Strecke nach dem Prinzip der Phasen- oder Impulsmodulation,

    - mit Mitteln zur Emission (1;2) von elektromagnetischer Strahlung mit wenigstens 2 Trägerwellenlängen,
    - mit Mitteln zum Empfang (6;7) von elektromagnetischer Strahlung der wenigstens 2 Trägerwellenlängen,
    - mit Mitteln zur Laufzeitbestimmung (8) der elektromagnetischen Strahlung

    bei dem folgende Schritte durchgeführt werden

    • Messen von Laufzeiten elektromagnetischer Strahlung wenigstens zweier verschiedener Trägerwellenlängen entlang der Strecke,

    • Berechnen des dispersiven Einflusses aus wenigstens 2 gemessenen Laufzeiten der elektromagnetischen Strahlung,

    **dadurch gekennzeichnet, dass**

    eine erste Trägerwellenlänge in einem Wellenlängenbereich ohne molekulare oder atomare Absorption atmosphärischer Gase (4) ausgewählt wird und

    eine zweite Trägerwellenlänge in einem Wellenlängenbereich mit molekularer oder atomarer Absorption, vorzugsweise in einem Spektralbereich mit wirksamen Spektrallinien, atmosphärischer Gase (4) ausgewählt wird.

2. Verfahren nach Anspruch 1,
    **dadurch gekennzeichnet, dass**
    mindestens eine der beiden Trägerwellenlängen im Wellenlängenbereich des atmosphärischen Transmissionsfensters für sichtbares Licht oder im infraroten Bereich emittiert wird.

3. Verfahren nach einem der vorangehenden Ansprüche,
    **dadurch gekennzeichnet, dass**
    die zweite Trägerwellenlänge in einem Wellenlängenbereich mit molekularer oder atomarer Absorption eines atmosphärischen Gases (4), insbesondere des Sauerstoffmoleküls $O_2$, ausgewählt wird.

4. Verfahren nach einem der vorhergehenden Ansprüche,
    **dadurch gekennzeichnet, dass**
    beim Messen der Laufzeiten der elektromagnetischen Strahlung

    mit spektral monomoder Strahlung ein Bereich mit stark überhöhtem Brechungsindex im Absorptionsband eines atmosphärischen Gases (4) vermessen wird
    **und/oder**
    mit spektral multimoder Strahlung ein Absorptionsband eines atmosphärischen Gases (4), ggf. durch Verschieben der Wellenlängen über den Bereich des Absorptionsbandes, vermessen wird
    **und/oder**
    ein Absorptionsband eines atmosphärischen Gases (4) mit Strahlung, z.B. einer flächen- oder kantenemittierende LED, deren spektrale Breite der Grössenordnung des Absorptionsbandes entspricht, vermessen wird.

5. Verfahren nach einem der vorangehenden Ansprüche,
    **dadurch gekennzeichnet, dass**

    die Mittel zur Emission (1;2) von elektromagnetischer Strahlung eine dritte Trägerwellenlänge emittieren und

    mit dieser Trägerwellenlänge ein Absorptionsband von atmosphärischem Wasserdampf vermessen und

der dispersive Einfluss von Wasserdampf eliminiert wird.

6. Verwendung des Verfahrens nach einem der vorangehenden Ansprüche zur dispersiven Distanzkorrektur eines Entfernungsmessgerätes.

7. Vorrichtung zur Ermittlung des dispersiven Einflusses auf eine Messung entlang einer Strecke mit einem Verfahren nach einem der Ansprüche 1 bis 5 nach dem Prinzip der Phasen- oder Impulsmodulation,

   - mit Mitteln zur Emission (1;2) von elektromagnetischer Strahlung mit wenigstens 2 Trägerwellenlängen,
   - mit Mitteln zum Empfang (6;7) der elektromagnetischen Strahlung mit den wenigstens 2 Trägerwellenlängen,
   - mit Mitteln zur Laufzeitbestimmung (8) der elektromagnetischen Strahlung entlang der Strecke für Strahlung der wenigstens zwei verschiedenen Trägerwellenlängen,
   - mit Mitteln zur Ermittlung des dispersiven Einflusses auf eine Messung aus wenigstens 2 gemessenen Laufzeiten der elektromagnetischen Strahlung,

   **dadurch gekennzeichnet, dass**
   die Mittel zur Emission (1;2) so ausgebildet sind, dass sie

   eine erste Trägerwellenlänge in einem Wellenlängenbereich ohne molekulare oder atomare Absorption atmosphärischer Gase (4) emittieren und

   eine zweite Trägerwellenlänge in einem Wellenlängenbereich mit molekularer oder atomarer Absorption atmosphärischer Gase (4), vorzugsweise in einem Spektralbereich mit wirksamen Spektrallinien, emittieren.

8. Vorrichtung nach Anspruch 7,
   **dadurch gekennzeichnet, dass**
   Mittel zur Berechnung einer Korrektur der dispersiven Einflüsse, bspw. für eine Distanzmessung, vorhanden sind.

9. Vorrichtung nach Anspruch 7 oder 8,
   **dadurch gekennzeichnet, dass**
   die Mittel zur Emission mindestens eine der beiden Trägerwellenlängen im Wellenlängenbereich des atmosphärischen Transmissionsfensters für sichtbares Licht emittieren.

10. Vorrichtung nach einem der Ansprüche 7 oder 9,
    **dadurch gekennzeichnet, dass**

die Mittel zur Emission (1;2) so ausgebildet sind, dass sie eine zweite Trägerwellenlänge in einem Wellenlängenbereich mit molekularer oder atomarer Absorption eines atmosphärischen Gases (4), insbesondere des Sauerstoffmoleküls $O_2$, emittieren.

11. Vorrichtung nach einem der Ansprüche 7 bis 10,
    **dadurch gekennzeichnet, dass**
    die Mittel zur Emission (1;2) so ausgebildet sind, dass sie eine zweite Trägerwellenlänge im Bereich von 685 nm bis 690 nm oder 755 nm bis 780 nm emittieren.

12. Vorrichtung nach einem der Ansprüche 7 bis 11,
    **dadurch gekennzeichnet, dass**
    die Mittel zur Emission (1;2) von elektromagnetischer Strahlung mindestens eines der folgenden Mittel aufweisen

    o eine Laserdiode, zur Emission spektral monomoder Strahlung,
    o eine Laserdiode, zur Emission spektral multimoder Strahlung,
    o eine Laserdiode, zur Emission von Strahlung, deren spektrale Breite der Grössenordnung des Absorptionsbandes entspricht,
    o eine LED, zur Emission von Strahlung, deren spektrale Breite der Grössenordnung des Absorptionsbandes entspricht,
    o eine LED-Filter-Kombination, zur Emission von Strahlung, deren spektrale Breite der Grössenordnung des Absorptionsbandes entspricht.

13. Vorrichtung nach einem der Ansprüche 7 bis 12,
    **dadurch gekennzeichnet, dass**
    die Mittel zur Emission (1;2) so ausgebildet sind, dass wenigstens eine Trägerwellenlänge der elektromagnetischen Strahlung verschoben werden kann.

14. Vorrichtung nach einem der Ansprüche 7 bis 13,
    **dadurch gekennzeichnet, dass**
    Mittel zur Stabilisierung für mindestens eine Trägerwellenlänge vorgesehen sind, wie

    o Distributed Feedback (DFB),
    o Distributed Bragg Reflector (DBR) oder
    o Fabry-Perot-Etalon-Locking.

15. Vorrichtung nach einem der Ansprüche 7 bis 14,
    **dadurch gekennzeichnet, dass**
    die Vorrichtung oder mindestens eines ihrer Bauteile modular gefasst sind.

16. Vorrichtung nach einem der Ansprüche 7 bis 15,
    **dadurch gekennzeichnet, dass**

**o** die Mittel zur Emission (1;2) von elektromagnetischer Strahlung so ausgebildet sind, dass sie eine dritte Trägerwellenlänge emittieren und

**o** diese Trägerwellenlänge in einem Absorptionsband von atmosphärischem Wasserdampf liegt, wobei durch eine Laufzeitmessung der dispersive Einfluss von Wasserdampf eliminiert wird.

**17.** Verwendung einer Vorrichtung nach einem der Ansprüche 7 bis 16, zur Korrektur der aus der Dispersion resultierenden Einflüsse auf Distanzmessungen.

**18.** Theodolit,
**dadurch gekennzeichnet, dass**
dieser eine Vorrichtung zur Ermittlung des dispersiven Einflusses nach einem der Ansprüche 7 bis 16 aufweist.

Fig. 1

Fig. 2

Fig. 3

Fig. 4

Fig. 5

Fig. 6

**EP 1 241 443 A1**

<table>
<tr><td></td><td>**Europäisches Patentamt**</td><td>**EUROPÄISCHER RECHERCHENBERICHT**</td><td>Nummer der Anmeldung<br>EP 01 10 5432</td></tr>
</table>

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | HIROKAZU MATSUMOTO ET AL: "MEASUREMENT OF THE CHANGES IN AIR REFRACTIVE INDEX AND DISTANCE BY MEANS OF A TWO-COLOR INTERFEROMETER"<br>APPLIED OPTICS, OPTICAL SOCIETY OF AMERICA,WASHINGTON, US,<br>Bd. 31, Nr. 22,<br>1. August 1992 (1992-08-01), Seiten 4522-4526, XP000292098<br>ISSN: 0003-6935<br>* das ganze Dokument * | 1,6,7, 17,18 | G01C15/00 |
| A | GALKIN Y S ET AL: "Influence of resonances on the phase and the group refractive indices of air"<br>JOURNAL OF GEODESY, OCT. 1997, SPRINGER-VERLAG, GERMANY,<br>Bd. 71, Nr. 11, Seiten 680-684, XP002176100<br>ISSN: 0949-7714<br>* das ganze Dokument * | 1,6,7, 17,18 | |

RECHERCHIERTE SACHGEBIETE (Int.Cl.7)

G01C

Der vorliegende Recherchenbericht wurde für alle Patentansprüche erstellt

| Recherchenort | Abschlußdatum der Recherche | Prüfer |
|---|---|---|
| DEN HAAG | 29. August 2001 | Hoekstra, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

12